# EUROPEAN PATENT APPLICATION

(11) **EP 1 183 941 A1**
(43) Date of publication of application: **06.03.2002**
(21) Application number: 01203203.3
(22) Date of filing: 27.08.2001
(51) Int. Cl.: A01G 9/10

(54) **Device for transferring balls of substrate or the like containing seeds or seedlings**

(30) Priority: 28.08.2000 NL 1016027
(71) Applicant: Mostert, Johannes Gerrit, 2685 VD Poeldijk (NL)
(72) Inventor: Mostert, Johannes Gerrit, 2685 VD Poeldijk (NL)
(74) Representative: Dorna, Peter

(57) **Abstract**

The invention relates to a device for transferring balls of substrate or the like containing seeds or seedlings, comprising a positioning element for supporting at least one container, in which balls of substrate are present, and at least one gripper capable of upward and downward movement, which is movable along a guide element in a substantially horizontal direction of movement during operation, between a position for removing a ball of substrate or the like from a container present on said positioning element and a position for delivering said balls of substrate or the like to a receiving element in a delivery station. The device comprises a supply conveyor (4) for supplying successive receiving elements in the form of separate pots (6) to the delivery station, and a discharge conveyor (5) for discharging the pots (6) from the delivery station, whilst means for transferring the pots (6) from the supply conveyor (4) to the discharge conveyor (5) are provided near the conveyor ends that are disposed near the delivery station.

## Description

The invention relates to a device for transferring balls of substrate or the like containing seeds or seedlings, comprising a positioning element for supporting at least one box, in which balls of substrate are present, and at least one gripper capable of upward and downward movement, which is movable along a guide element in a substantially horizontal direction of movement during operation, between a position for removing a ball of substrate or the like from a box present on said positioning element and a position for delivering said balls of substrate or the like to a receiving element in a delivery station.

A device of this kind can be derived from Dutch patent application no. 9000803. In this known device, the positioning element for the boxes from which the balls of substrate are removed is either a table or a conveyor. The receiving elements into which said balls of substrate or the like are placed in a delivery station are boxes or so-called trays, which are provided with a large number of openings with a view to receiving a large number of balls of substrate or the like. Said receiving elements in the form of boxes are moved past the delivery station by means of a conveyor consisting of two endless belts.

The use of such receiving elements in the form of boxes or trays provided with a large number of openings for receiving balls of substrate or the like is expensive. Another problem in the cultivation of plants in boxes of this kind is that frequently at least some of the seeds or the seedlings do not come into bloom. A box in which a few seeds or seedlings have not come into bloom cannot be removed in connection with the blooming seeds or seedlings that are present therein. As a result, the area occupied by the boxes on which the seed or the seedlings are to come into bloom is used rather less optimally.

Consequently, in many cases a need is felt to use separate pots, into each of which a ball of substrate or the like can be placed. In the first place, the use of such pots is cheaper than the use of boxes or so-called trays, whilst a pot which contains a seed or seedling that does not come into bloom can easily be removed from between pots containing seeds or seedlings that do come into bloom, which pots can subsequently be joined together again so as to enable an optimum use of the area occupied by the pots.

In connection with this there has been a long-felt need for a device which is suitable for placing balls of substrate or the like into separate pots in an effective manner.

According to the invention, this objective can be accomplished in that said device comprises a supply conveyor for supplying successive receiving elements in the form of separate pots to the delivery station, and a discharge conveyor for discharging the pots from the delivery station, whilst means for transferring the pots from the supply conveyor to the discharge conveyor are provided near the conveyor ends that are disposed near the delivery station.

The use of the construction according to the invention makes it possible to effect a controlled supply and discharge of the individual pots to the delivery station, in such a manner that balls of substrate or the like can be placed into the pots by means of said gripper.

A compact construction of the device can be obtained if the supply conveyor and the discharge conveyor extend at least substantially parallel to each other. An advantageous position with respect to the positioning element for supporting at least one box containing balls of substrate can be obtained if the two conveyors extend at least substantially parallel to the substantially horizontal direction of movement of the gripper.

A simple construction of the means for transferring the pots from one conveyor to the other conveyor is obtained when a sliding piece which is capable of reciprocating movement is used.

Preferably, two reciprocating sliding pieces positioned opposite each other are provided, in such a manner that at least one pot can be clamped between said sliding pieces in the delivery station, thus making it possible to effect an accurate positioning of the pot in the delivery station.

If the conveyors comprising the means for transferring the pots from one conveyor to the other conveyor are mounted on an auxiliary frame, said auxiliary frame may be constructed in such a manner that it can be detachably connected to an existing device for transferring balls of substrate or the like from one box to another box, of the type as known from the aforesaid Dutch patent application no. 9000803, for example. In this way, a machine can be obtained which can be used both for transferring balls of substrate from one box to another box and for transferring balls of substrate or the like from one box to individual pots.

The invention will now be explained in more detail with reference to the drawings, which schematically show an embodiment of the construction according to the invention.

Figure 1 is a schematic top plan view of part of a device according to the invention.

Figure 2 is a larger-scale view of part of the construction of Figure 1.

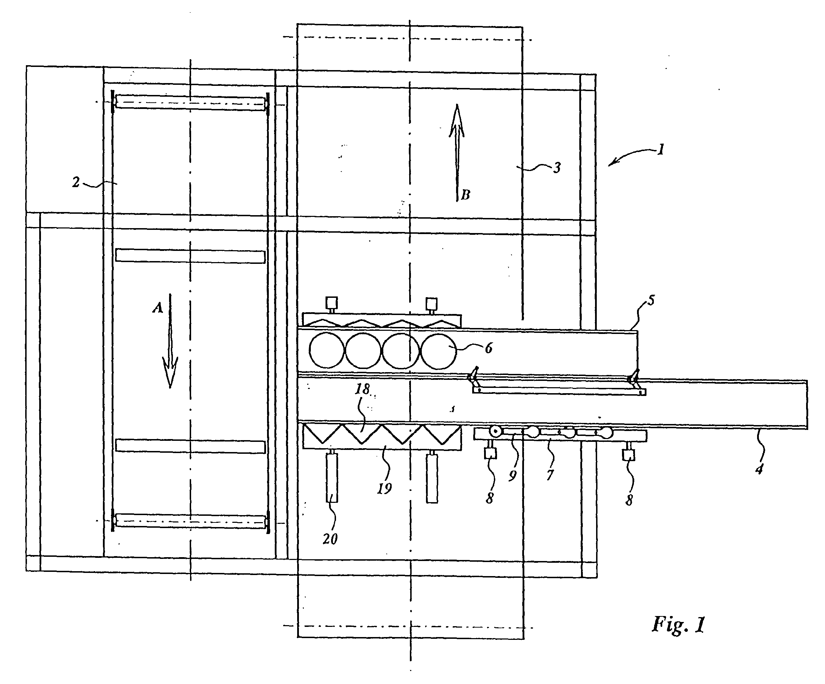

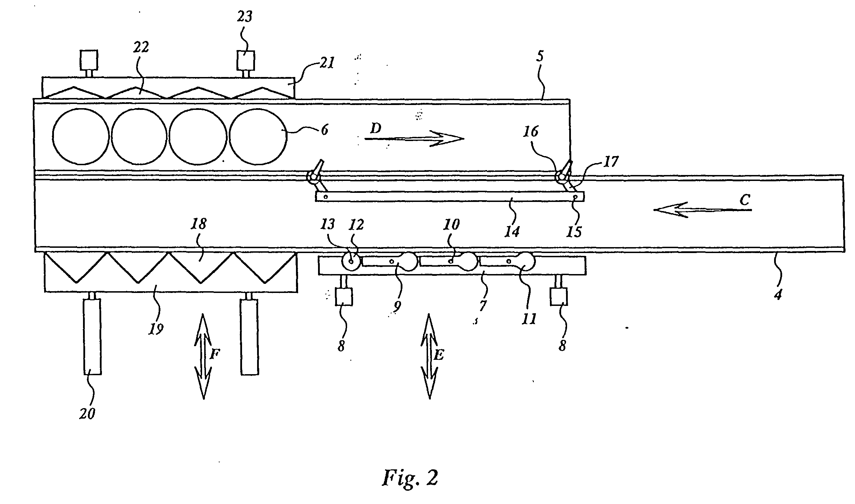

The device that is shown in Figure 1 comprises a frame 1 and two endless conveyor belts 2 and 3, by means of which boxes (not shown), which are provided with a large number of openings for receiving balls of substrate or the like, can be moved in opposite directions, as is indicated by means of arrows A and B. At least one vertically movable gripper (not shown) can be moved forwards and backwards in horizontal direction, substantially perpendicularly to the longitudinal direction of the two conveyor belts 2 and 3, along a guide member (not shown, either) that extends across the two conveyor belts 2 and 3. A possible embodiment of such an arrangement can be derived from the aforesaid Dutch patent application no. 9000803, in particular Figure 2 thereof, whose contents are considered incorporated herein by this reference, so that the construction and the operation of the said parts need not be discussed in further detail herein.

The device furthermore comprises a supply conveyor 4, preferably in the form of an endless conveyor belt, and a discharge conveyor 5, preferably in the form of an endless conveyor belt. In the illustrated embodiment, the two conveyors 4 and 5 extend parallel to each other and perpendicularly to the directions of movement of the conveyor belts 2 and 3, and thus also parallel to the horizontal direction of movement of the gripper (not shown).

Preferably, the two conveyor belts 4 and 5, by means of which pots 6 to be filled with balls of substrate can be moved during operation, as well as the further means (yet to be described) for controlling the movement of the pots 6 during operation, are mounted on an auxiliary frame (not shown), which can be detachably connected to a machine of the type which is disclosed in the aforesaid Dutch patent application no. 9000803, which machine is already commercially available. It will also be conceivable, however, to construct a machine which only comprises a positioning element for supporting at least one box containing balls of substrate, which is in the form of conveyor belt 2 in the present embodiment, but which may also be of different construction, as well as the two conveyors 4 and 5 and the means for moving the pots 6 that are associated therewith.

As is shown in particular in Figure 2, a carrier 7 extending parallel to the longitudinal direction of supply conveyor 4 is disposed beside conveyor 4, which carrier can be moved forwards and backwards in a direction perpendicularly to its longitudinal direction, as is indicated by means of double arrow E, by means of adjusting elements, for example setting cylinders 8.

A number of levers 9, three in the illustrated embodiment, are pivotally connected to said carrier 7 by means of vertically extending pivot pins 10. The upstream ends of levers 9, seen in the intended direction of movement C of the pots on the supply conveyor 4, are provided with thickenings or stops 11. Seen in the direction of movement according to arrow C, a further stop 12 is provided downstream of the pivotable levers 9 on carrier 7, which stop is formed by a disc which rotates about a vertically extending pin 13 in the illustrated embodiment.

A guide strip 14 extending parallel to the longitudinal direction of conveyor belt 4 is mounted near the longitudinal side of the conveyor belt 4 remote from carrier 7, the ends of which guide strip are connected, by means of vertically extending pivot pins 15, to arms 17 which pivot about pivot pins 16 that likewise extend in vertical direction.

Guide strip 14 can move out from the position that is shown in the figure, in a direction away from carrier 7, against the action of spring means which attempt to keep the guide strip 14 in the illustrated position.

A sliding piece 19 provided with a number of recesses 18, four in the illustrated embodiment, is mounted downstream of the carrier 7, seen in the direction of movement according to arrow C, which sliding piece can be moved forwards and backwards, likewise in horizontal direction and perpendicularly to the longitudinal direction of conveyor belt 4, by means of setting cylinders 20 or the like, as is indicated by means of arrow F.

Near the side of the conveyor belt 5 remote from the conveyor belt 4 and opposite the sliding piece 19 there has been arranged a similar sliding piece 21 having also four recesses 22. Thereby the sliding piece 21 can be moved also in horizontal direction and perpendicularly to the longitudinal direction of the conveyor belts 4 and 5 by means of setting cylinders 23 or the like, as indicated by arrow F.

During operation, pots 6 to be filled with balls of substrate or the like will be moved in the direction indicated by arrow C by means of conveyor belt 4. A leading pot will first come into contact with the thickening 11 of the extreme right-hand lever 2, seen in the figures, which thickening forms a stop. This causes the lever to pivot in such a manner that the pot can pass the thickening or stop 11 in question, after which the pot, which moves further ahead, will pivot said extreme right-hand lever back to the position that is shown in the figures.

Thus, said leading pot can pass the bell-crank levers 9 and come to a standstill against the frontmost stop 12. The next pot can then move to a position near stop 11 of the extreme left-hand lever 9, seen in Figure 2, the following pot can move until the stop that forms part of the middle lever 9, and the fourth pot can move until the stop 11 that forms part of the extreme right-hand lever 9, seen in Figure 2. Thus, four pots are arranged in a group. Any differences in the dimensions of the pots can be accommodated by the spring-mounted guide strip 14.

Once a group consisting of a number of pots 6, four in the present example, has thus been formed, carrier 7 will be moved downwards, seen in Figure 2, so as to remove the stops 11 and 12 from the path of movement of pots 6. The group of pots that has thus been formed is then moved further in the direction of the sliding piece 19 by means of the conveyor belt 4, whereby the pots are positioned opposite recesses 18. Then the pots are moved to the position that is shown in Figure 2 by means of sliding piece 19 and clamped down in that position between the two sliding pieces 19 and 21. Subsequently, balls of substrate or the like containing seeds or seedlings can be removed, by means of the gripper (not shown), from a box or tray present on the positioning element formed by conveyor belt 2 and be transferred to pots 6. After each of the pots 6 has thus been filled with a ball of substrate or the like, said pots can be discharged in the direction indicated by arrow D again by means of conveyor belt 5.

It will be apparent that the construction of the sliding pieces 19 and 21 can also be such that the balls of substrate are placed into the pots 6 while said pots are still present on conveyor belt 4, after which the pots 6 are transferred to the conveyor belt 5 by means of sliding piece 19, which forms the means for transferring the pots.

## Claims

1. A device for transferring balls of substrate or the like containing seeds or seedlings, comprising a positioning element for supporting at least one container, in which balls of substrate or the like are present, and at least one gripper capable of upward and downward movement, which is movable along a guide element in a substantially horizontal direction of movement during operation, between a position for removing a ball of substrate or the like from a container present on said positioning element and a position for delivering said balls of substrate or the like to a receiving element in a delivery station, **characterized in that** said device comprises a supply conveyor for supplying successive receiving elements in the form of separate pots to the delivery station, and a discharge conveyor for discharging the pots from the delivery station, whilst means for transferring the pots from the supply conveyor to the discharge conveyor are provided near the conveyor ends that are disposed near the delivery station.

2. A device according to claim 1, **characterized in that** said conveyors are arranged at least substantially parallel to each other.

3. A device according to any one of the preceding claims, **characterized in that** said conveyors are arranged at least substantially parallel to the substantially horizontal direction of movement of said gripper.

4. A device according to any one of the preceding claims, **characterized in that** said means for transferring pots from one conveyor to the other conveyor comprise a sliding piece which is capable of reciprocating movement.

5. A device according to claim 4, **characterized in that** two reciprocating sliding pieces positioned opposite each other are provided near the delivery station, between which at least one pot present in the delivery station can be clamped.

6. A device according to claim 4 or 5, **characterized in that** said sliding piece is provided with at least one recess for receiving at least part of a pot.

7. A device according to any one of the preceding claims, **characterized in that** a carrier is disposed upstream of the delivery station, seen in the direction in which the pots are moved by means of the supply conveyor, which carrier includes a number of levers which pivot about vertically extending pivot pins, on the upstream ends of which stops are present as well as a fixed step, whilst said carrier is movable in a direction transversely to the longitudinal direction of said supply conveyor.

8. A device according to claim 7, **characterized in that** a spring-loaded guide strip for the pots is disposed opposite said carrier.

9. A device according to any one of the preceding claims, **characterized in that** the conveyors comprising the means for transferring the pots are mounted on an auxiliary frame, which can be detachably connected to an existing device for transferring balls of substrate or the like from one box to a box positioned beside said box, seen in the direction of movement of said gripper.
